# EUROPÄISCHE PATENTANMELDUNG

(11) **EP 3 520 617 A1**
(43) Veröffentlichungstag der Anmeldung: **07.08.2019**
(21) Anmeldenummer: 18154341.4
(22) Anmeldetag: 31.01.2018
(51) Int. Cl.: A21B 5/02, A21B 1/28

(54) **BACKOFEN UND VERFAHREN ZUM HERSTELLEN GEBACKENER PRODUKTE**

(71) Anmelder: Haas Food Equipment GmbH, 1210 Wien (AT)
(72) Erfinder: BIBARIC, Markus, 3400 KIERLING (AT)
(74) Vertreter: Puchberger & Partner Patentanwälte

(57) **Zusammenfassung**

Verfahren und Backofen zum Herstellen gebackener, bevorzugt essbarer, Produkte, umfassend einen entlang einer Längsrichtung (18) verlaufenden Endlosförderer (1) und mehrere entlang dem Endlosförderer (1) vorgesehene offenbare und schließbare Backzangen (2), wobei zwischen einem ersten Konvektionsgebläseauslass (16) und einem Abzug (15) entlang der Längsrichtung (18) betrachtet mehrere als Strahlungsheizvorrichtungen ausgebildete Heizmodule (10, 11, 13) (8) angeordnet sind, und wobei entlang der Längsrichtung (18) betrachtet, zwischen einem ersten Heizmodul (10) und einem zweiten Heizmodul (11) ein zweiter Konvektionsgebläseauslass (12) zur Erzeugung einer entlang der Längsrichtung (18) bis zum Abzug (15) verlaufenden Konvektionsströmung (9) vorgesehen ist.

## Beschreibung

Die Erfindung betrifft einen Backofen und ein Verfahren gemäß den Oberbegriffen der unabhängigen Patentansprüche.

Gattungsgemäße Backöfen sind in unterschiedlichen Ausführungen bekannt und publiziert. Die erfindungsgemäße Vorrichtung betrifft bevorzugt einen industriellen Backofen zur Herstellung von Backprodukten, wie beispielsweise einen Backofen zur Herstellung von Flachwaffeln oder Hohlwaffeln.

Derartige Öfen sind beispielsweise als sogenannte Backzangenautomaten ausgebildet. Bei diesen speziellen Backöfen sind entlang eines Endlosförderers auf- und zuklappbare Backzangen vorgesehen, die insbesondere in ihrer zugeklappten Stellung jeweils eine Backform bilden. Die Backzangen werden entlang des Endlosförderers meist kontinuierlich durch den Backofen gefördert. Dabei wird auf eine aufgeklappte Backzange eine Backmasse aufgetragen. Anschließend wird die Backzange zugeklappt, verriegelt und durch den heißen Backraum befördert. In weiterer Folge wird das Backprodukt in der geschlossenen Backzange durch den Backraum gefördert und dort ausgebacken. Dann wird die Backzange geöffnet, sodass das Backprodukt entnommen werden kann. In weiterer Folge beginnt der Zyklus von neuem.

Am Markt besteht nun eine Nachfrage nach Backöfen zur industriellen Herstellung von Backprodukten, deren Effizienz, insbesondere deren Energieeffizienz, verbessert wird. Bisher wurde eine Verbesserung der Energieeffizienz beispielsweise dadurch bewirkt, dass der Backraum weitestgehend geschlossen ausgebildet wird. Dadurch konnten die Wärmeverluste verringert werden. Weitere Maßnahmen zur Steigerung der Effizienz sind beispielsweise die Verwendung von Strahlungsheizvorrichtungen oder auch die Regelung der zu- oder abgeführten Luft.

Strahlungsheizvorrichtungen oder Strahlungsbrenner sind Vorrichtungen, bei denen ein Brennstoff-Luft-Gemisch beispielsweise in einem porösen Körper, vorzugsweise in einem porösen Metall- oder Keramikkörper, insbesondere in einem Metallgewebe, einem Drahtgewebe oder in einem Metallgeflecht, im Wesentlichen flammenfrei verbrannt wird.

Bei einer Kombination aus geschlossenem Backraum und effizienter Heizvorrichtung kann es vorkommen, dass die meist ausschließlich mit Primärluft betriebenen Strahlungsheizvorrichtungen zu wenig Gas- oder Luftdurchsatz erzeugen, womit keine ausreichende Durchströmung des Backraums gegeben ist.

Zur Lösung dieses Problems sind Backöfen mit einem im Wesentlichen geschlossenen Backraum bekannt, bei denen zur Beheizung des Backraums Strahlungsheizvorrichtungen eingesetzt werden, und bei denen zur Erzeugung einer ausreichenden Konvektionsströmung ein Konvektionsgebläse vorgesehen ist. Zur Ableitung der Backraumgase und der Konvektionsströmung ist ein Abzug vorgesehen, der in den Backraum mündet bzw. aus dem Backraum abzweigt. Zur effizienten Ausnutzung der Wärmeenergie sind entlang der Längsrichtung des Backraums zuerst die Einmündung des Konvektionsgebläseauslasses, dann die Heizanordnung und dann der Abzug angeordnet. Der Abzug und der Konvektionsgebläseauslass sind bevorzugt an gegenüberliegenden Seiten des Backraums angeordnet. Zwischen dem Abzug und dem Konvektionsgebläseauslass sind die Strahlungsheizvorrichtungen angeordnet.

Zur Erhöhung der Effizienz und insbesondere des Durchsatzes derartiger Backöfen ist es bekannt, die Anzahl der Backplatten zu erhöhen, wodurch aber gleichzeitig auch die Länge des Backofens und auch die einzubringende Wärmemenge erhöht werden müssen.

In der Praxis hat sich herausgestellt, dass es nicht möglich ist, die Erhöhung der einzubringenden Wärmemenge durch einfaches Anbringen zusätzlicher Strahlungsheizvorrichtungen zu erzielen. Schließlich wird auch durch die Strahlungsheizvorrichtungen ein heißer Gasstrom erzeugt, der insbesondere bei von oben auf die Backzangen gerichteten Strahlungsheizvorrichtungen ähnlich einem Heißluftvorhang wirkt. Die Konvektionsströmung wird durch diese heiße Querströmung gestört und aus dem Abzug wird lediglich das heiße Abgas einer näher am Abzug angeordneten Strahlungsheizvorrichtung abgesaugt. Im Bereich der Strahlungsheizvorrichtungen kommt es dadurch zu einem Hitzestau und gegebenenfalls sogar zu einer Beschädigung einer derart ausgestalteten Backmaschine. Wird der Volumenstrom des Konvektionsgebläses erhöht, so beeinträchtigt dies wiederum die Funktion jener Strahlungsheizvorrichtungen, die nahe am Konvektionsgebläseauslass positioniert sind.

Somit besteht, ausgehend vom Stand der Technik, ein Zielkonflikt zwischen effizienter Beheizung und Erhöhung des Durchsatzes von gattungsgemäßen Backöfen.

Aufgabe der Erfindung ist es, die Nachteile des Standes der Technik zu überwinden und insbesondere diesen Zielkonflikt zu lösen.

Die erfindungsgemäße Aufgabe wird insbesondere durch die Merkmale des unabhängigen Patentanspruchs gelöst.

Insbesondere betrifft die Erfindung einen Backofen zum Herstellen gebackener, bevorzugt essbarer, Produkte, umfassend: einen entlang einer Längsrichtung verlaufenden Endlosförderer und mehrere entlang dem Endlosförderer vorgesehene offenbare und schließbare Backzangen, die aneinandergereiht insbesondere nacheinander: einen Backmassenauftragsbereich zum Auftrag einer Backmasse auf eine geöffnete Backzange, einen Schließbereich zum Schließen der Backzangen, einen entlang dem Endlosförderer verlaufenden, länglichen Backraum zum Backen der Backprodukte in den geschlossenen Backzangen, wobei in dem Backraum mindestens eine Heizanordnung zur Beheizung der im Backraum befindlichen Backzangen vorgesehen ist, einen Öffenbereich zum Öffnen der Backzangen und einen Backproduktentnahmebereich zur Entnahme der gebackenen Produkte aus den geöffneten Backzangen durchlaufen, wobei, entlang der Längsrichtung betrachtet, an einer Seite des Backraums ein Abzug zur Abführung der Brennraumgase vorgesehen ist, wobei, entlang der Längsrichtung betrachtet, an der anderen Seite des Backraums ein erster Konvektionsgebläseauslass zur Erzeugung einer entlang der Längsrichtung bis zum Abzug verlaufenden Konvektionsströmung vorgesehen ist, und wobei zwischen dem ersten Konvektionsgebläseauslass und dem Abzug entlang der Längsrichtung betrachtet mehrere als Strahlungsheizvorrichtungen ausgebildete Heizmodule der Heizanordnung angeordnet sind.

Erfindungsgemäß ist vorgesehen, dass entlang der Längsrichtung betrachtet, zwischen einem ersten Heizmodul und einem zweiten Heizmodul ein zweiter Konvektionsgebläseauslass zur Erzeugung einer entlang der Längsrichtung bis zum Abzug verlaufenden Konvektionsströmung vorgesehen ist.

Gegebenenfalls ist vorgesehen, dass der zweite Konvektionsgebläseauslass, insbesondere dessen Ausströmungsrichtung, entlang der Längsrichtung Richtung Abzug ausgerichtet ist.
Gegebenenfalls ist vorgesehen, dass der zweite Konvektionsgebläseauslass, insbesondere dessen Ausströmungsrichtung, ausschließlich Richtung Abzug ausgerichtet ist.

Ein ausschließlich Richtung Abzug ausgerichteter Konvektionsgebläseauslass weist Richtung Abzug, wobei die Richtung schräg zur Längsrichtung und/oder in Längsrichtung ausgerichtet sein kann. Insbesondere bedeutet "Richtung Abzug", dass das aus dem Konvektionsgebläseauslass austretende Gas keinesfalls gegen die gewünschte Konvektionsströmung gerichtet ist.

Gegebenenfalls ist vorgesehen, dass entlang der Längsrichtung zwischen dem zweiten Heizmodul und dem Abzug mindestens ein weiteres Heizmodul vorgesehen ist, und dass entlang der Längsrichtung zwischen dem zweiten Heizmodul und dem weiteren Heizmodul ein weiterer Konvektionsgebläseauslass zur Erzeugung einer entlang der Längsrichtung bis zum Abzug verlaufenden Konvektionsströmung vorgesehen ist, wobei der weitere Konvektionsgebläseauslass, insbesondere dessen Ausströmungsrichtung, entlang der Längsrichtung Richtung Abzug ausgerichtet ist oder ausschließlich Richtung Abzug ausgerichtet ist.

Gegebenenfalls ist zwischen dem ersten Heizmodul und dem zweiten Heizmodul ein Heizmodul vorgesehen, vor dem kein Konvektionsgebläseauslass vorgesehen ist. Gegebenenfalls ist zwischen dem zweiten Heizmodul und dem weiteren Heizmodul ein Heizmodul vorgesehen, vor dem kein Konvektionsgebläseauslass vorgesehen ist.

Gegebenenfalls ist vorgesehen, dass entlang der Längsrichtung nacheinander mehrere Heizmodule vorgesehen sind, und dass entlang der Längsrichtung zwischen den Heizmodulen mehrere Konvektionsgebläseauslässe zur Erzeugung einer entlang der Längsrichtung bis zum Abzug verlaufenden Konvektionsströmung vorgesehen sind, die jeweils entlang der Längsrichtung Richtung Abzug ausgerichtet sind oder die ausschließlich Richtung Abzug ausgerichtet sind.

Gegebenenfalls ist vorgesehen, dass der Endlosförderer oder zumindest die Backzangen entlang einer oberen Transportebene verlaufen, dann in einem hinteren Umlenkbereich auf eine, unterhalb der oberen Transportebene verlaufende, untere Transportebene umgelenkt werden, dann weiter entlang der unteren Transportebene verlaufen und in einem vorderen Umlenkbereich wieder auf die obere Transportebene umgelenkt werden, und wobei die obere Transportebene und die untere Transportebene entlang der Längsrichtung 18 verlaufen.

Gegebenenfalls ist vorgesehen, dass das erste Heizmodul, das zweite Heizmodul und das gegebenenfalls vorgesehene weitere Heizmodul oberhalb der oberen Transportebene vorgesehen sind und von oben auf die entlang der oberen Transportebene angeordneten Backzangen gerichtet sind, oder dass das erste Heizmodul, das zweite Heizmodul und das gegebenenfalls vorgesehene weitere Heizmodul zwischen der oberen Transportebene und der unteren Transportebene vorgesehen sind und von oben auf die entlang der unteren Transportebene angeordneten Backzangen gerichtet sind.

Gegebenenfalls ist vorgesehen, dass zwei erste Heizmodule, nämlich ein oberes erstes Heizmodul und ein unteres erstes Heizmodul, zwei zweite Heizmodule, nämlich ein oberes zweites Heizmodul und ein unteres zweites Heizmodul, und gegebenenfalls zwei weitere Heizmodule, nämlich ein oberes weiteres Heizmodul und ein unteres weiteres Heizmodul, vorgesehen sind, wobei jeweils eines der beiden ersten, zweiten und gegebenenfalls weiteren Heizmodule oberhalb der oberen Transportebene vorgesehen ist und von oben auf die entlang der oberen Transportebene angeordneten Backzangen gerichtet ist, und das jeweils andere Heizmodul zwischen der oberen Transportebene und der unteren Transportebene vorgesehen ist und von oben auf die entlang der unteren Transportebene angeordneten Backzangen gerichtet ist.

Gegebenenfalls ist vorgesehen, dass entlang der Längsrichtung betrachtet, zwischen dem bzw. einem ersten oberen Heizmodul und dem bzw. einem zweiten oberen Heizmodul ein zweiter oberer Konvektionsgebläseauslass vorgesehen ist.

Gegebenenfalls ist vorgesehen, dass entlang der Längsrichtung betrachtet zwischen dem ersten unteren Heizmodul und dem zweiten unteren Heizmodul ein zweiter unterer Konvektionsgebläseauslass vorgesehen ist.

Gegebenenfalls ist vorgesehen, dass entlang der Längsrichtung zwischen dem zweiten oberen Heizmodul und dem Abzug mindestens ein weiteres oberes Heizmodul vorgesehen ist, dass entlang der Längsrichtung zwischen dem zweiten oberen Heizmodul und dem weiteren oberen Heizmodul ein weiterer oberer Konvektionsgebläseauslass vorgesehen ist, wobei der weitere obere Konvektionsgebläseauslass, insbesondere dessen Ausströmungsrichtung, entlang der Längsrichtung Richtung Abzug gerichtet ist.

Gegebenenfalls ist vorgesehen, dass entlang der Längsrichtung zwischen dem zweiten unteren Heizmodul und dem Abzug mindestens ein weiteres unteres Heizmodul vorgesehen ist, und dass entlang der Längsrichtung zwischen dem zweiten unteren Heizmodul und dem weiteren unteren Heizmodul ein weiterer unterer Konvektionsgebläseauslass vorgesehen ist, wobei der weitere untere Konvektionsgebläseauslass, insbesondere dessen Ausströmungsrichtung, entlang der Längsrichtung Richtung Abzug gerichtet ist.

Gegebenenfalls ist vorgesehen, dass zwischen zwei oberen Heizmodulen ein Konvektionsgebläseauslass vorgesehen ist, dass jedoch der Konvektionsgebläseauslass zwischen den korrespondierenden unteren beiden Heizmodulen entfällt. Ebenso kann vorgesehen sein, dass zwischen zwei unteren Heizmodulen ein Konvektionsgebläseauslass vorgesehen ist, dass jedoch der Konvektionsgebläseauslass zwischen den korrespondierenden oberen beiden Heizmodulen entfällt. Insbesondere können Konvektionsgebläseauslässe alternierend oben und unten zwischen den jeweiligen Heizmodulen angeordnet sein.

Gegebenenfalls ist vorgesehen, dass der Abzug entlang der durch die Konvektionsgebläseauslässe erzeugten Konvektionsströmung nach der Heizanordnung und insbesondere nach allen Heizmodulen vom Backraum abzweigt.

Gegebenenfalls ist vorgesehen, dass eine Regulieranordnung zur separaten oder gruppenweisen Steuerung oder Regelung der durch die Konvektionsgebläseauslässe ausgegebenen Volumenströme vorgesehen ist, wobei die Regulieranordnung Durchflussregler zur Veränderung der durch die Konvektionsgebläseauslässe ausgegebenen Volumenströme umfasst, und/oder wobei die Regulieranordnung steuerbare oder regelbare Gebläse zur Veränderung der durch die Konvektionsgebläseauslässe ausgegebenen Volumenströme umfasst.

Gegebenenfalls ist vorgesehen, dass ein oder jeder Konvektionsgebläseauslass eine oder mehrere Auslassdüsen umfasst. Gegebenenfalls ist vorgesehen, dass der durch die Konvektionsgebläseauslässe ausgegebene Volumenstrom, gegebenenfalls vorgewärmte, Umgebungsluft und/oder im Backraum befindliches oder aus dem Backraum entnommenes Backraumgas ist.

Gegebenenfalls ist vorgesehen, dass der mindestens eine zweite Konvektionsgebläseauslass und der gegebenenfalls vorgesehenen mindestens eine weitere Konvektionsgebläseauslass jeweils mit einem außerhalb des Backraums angeordneten Gebläse verbunden sind, wobei dem Gebläse Umgebungsluft oder aus dem Backraum entnommenes Backraumgas zugeführt ist. Gegebenenfalls ist vorgesehen, dass der mindestens eine zweite Konvektionsgebläseauslass und der gegebenenfalls vorgesehenen mindestens eine weitere Konvektionsgebläseauslass jeweils mit einem innerhalb des Backraums angeordneten, als Ventilator wirkenden, Gebläse verbunden sind, wobei dem Gebläse im Backraum befindliches Backraumgas zugeführt ist.

Gegebenenfalls ist vorgesehen, dass mindestens ein Konvektionsheizmodul vorgesehen ist, wobei das Konvektionsheizmodul eines der Heizmodule und gegebenenfalls auch den entlang der Konvektionsströmung dem Heizmodul vorgelagerten Konvektionsgebläseauslass und gegebenenfalls das dem Konvektionsgebläseauslass dieses Konvektionsheizmoduls zugeordnete Gebläse umfasst.

Gegebenenfalls ist vorgesehen, dass das Konvektionsheizmodul ein oberes Heizmodul und ein zugehöriges unteres Heizmodul, insbesondere das zweite obere Heizmodul und das zweite untere Heizmodul oder das weitere obere Heizmodul und das weitere untere Heizmodul umfasst.

Gegebenenfalls ist vorgesehen, dass das Konvektionsheizmodul die zugehörigen, den Heizmodulen vorgelagerten, Konvektionsgebläseauslässe umfasst, und dass das Konvektionsheizmodul gegebenenfalls das den Konvektionsgebläseauslässen dieses Konvektionsheizmoduls zugeordnete Gebläse umfasst.

Gegebenenfalls ist vorgesehen, dass entlang der Längsrichtung zwei oder mehr Konvektionsheizmodule angeordnet sind.

Insbesondere betrifft die Erfindung ein Verfahren zum Herstellen gebackener, bevorzugt essbarer, Produkte in einem Backofen, bei dem mehrere entlang einem Endlosförderer vorgesehene offenbare und schließbare Backzangen, aneinandergereiht insbesondere nacheinander: durch einen Backmassenauftragsbereich zum Auftrag einer Backmasse auf eine geöffnete Backzange, durch einen Schließbereich zum Schließen der Backzangen, durch einen entlang des Endlosförderers verlaufenden, länglichen Backraum zum Backen der Backprodukte in den geschlossenen Backzangen, in dem mindestens eine Heizanordnung zur Beheizung der im Backraum befindlichen Backzangen vorgesehen ist, durch einen Öffenbereich zum Öffnen der Backzangen, und durch einen Backproduktentnahmebereich zur Entnahme der gebackenen Produkte aus den geöffneten Backzangen befördert werden, wobei, entlang der Längsrichtung betrachtet, an einer Seite des Backraums die Brennraumgase durch einen Abzug abgeführt werden, wobei, entlang der Längsrichtung betrachtet, an der anderen Seite des Backraums durch einen ersten Konvektionsgebläseauslass ein erster Gasvolumenstrom zur Bildung oder Unterstützung einer entlang der Längsrichtung bis zum Abzug verlaufenden Konvektionsströmung in den Backraum eingebracht wird.

Gegebenenfalls ist vorgesehen, dass das entlang der Konvektionsströmung strömende Backraumgas mindestens ein erstes Heizmodul passiert und dadurch erwärmt wird, wobei dem entlang der Konvektionsströmung strömenden Backraumgas durch das erste Heizmodul ein erster Heizgasvolumenstrom beigemengt wird, dass das entlang der Konvektionsströmung strömende Backraumgas anschließend mindestens einen zweiten Konvektionsgebläseauslass passiert, wobei dem entlang der Konvektionsströmung strömenden Backraumgas durch den zweiten Konvektionsgebläseauslass ein zweiter Gasvolumenstrom beigemengt wird oder wobei das entlang der Konvektionsströmung strömende Backraumgas durch den zweiten Konvektionsgebläseauslass weitergefördert wird, dass das entlang der Konvektionsströmung strömende Backraumgas anschließend mindestens ein zweites Heizmodul passiert und dadurch erwärmt wird, wobei dem entlang der Konvektionsströmung strömenden Backraumgas durch das zweite Heizmodul ein zweiter Heizgasvolumenstrom beigemengt wird, und dass das entlang der Konvektionsströmung strömende Backraumgas anschließend den Backraum weiter durchströmt und anschließend in den Abzug eintritt.

Gemäß einer Ausführungsform kann vorgesehen sein, dass der Endlosförderer und die Backzangen an einem im Backraum angeordneten hinteren Umlenkpunkt und an einem entfernt vom Backraum in einem Vorkopf angeordneten vorderen Umlenkpunkt umgelenkt sind, wobei der Backraum als im Wesentlichen geschlossener Backraum mit einer Wärmeisolierung ausgebildet ist, der eine Eintrittsöffnung zum Eintritt der Backzangen, eine Austrittsöffnung zum Austritt der Backzangen und einen Abzug zur Abführung der Brennraumgase umfasst, und wobei mindestens ein Konvektionsgebläse vorgesehen ist, das entfernt vom Abzug in den Backraum mündet.

Alternativ kann vorgesehen sein, dass der Backmassenauftragsbereich, der Schließbereich, der Öffenbereich und der Backproduktentnahmebereich innerhalb des Backraums angeordnet sind. Hierbei kann vorgesehen sein, dass der gesamte Endlosförderer oder zumindest alle an dem Endlosförderer angeordneten Backzangen, insbesondere während des Backbetriebs, innerhalb des Backraums angeordnet sind.

Gegebenenfalls ist vorgesehen, dass ein regelbares oder steuerbares Abzugsgebläse zur Absaugung des Brennraumgases durch den oder einen Abzug vorgesehen ist.

Gegebenenfalls betrifft die Erfindung einen Backofen zum Herstellen gebackener, bevorzugt essbarer, Produkte, umfassend einen Backraum, mit einem unteren Backbereich und einem oberhalb des unteren Backbereichs angeordneten oberen Backbereich, eine Backzangenkette, die kontinuierlich umlaufend entlang einer oberen Transportebene durch den oberen Backbereich und entlang einer unteren Transportebene durch den unteren Backbereich bewegt wird, und die auf- und zuklappbare Backzangen enthält.

Gegebenenfalls ist vorgesehen, dass die Backzangen je eine Oberplattenanordnung und eine Unterplattenanordnung umfassen, zwischen denen in zugeklappter Stellung eine Backform für die Backprodukte gebildet ist.

Gegebenenfalls ist vorgesehen, dass die Oberplattenanordnung und die Unterplattenanordnung jeweils an ihrer der Backform abgewandten Seite eine Rückenfläche aufweisen, die jeweils über einen wärmeleitenden und -speichernden Basiskörper mit der Backform verbunden sind.

Gegebenenfalls ist vorgesehen, dass die Backzangen beim Übergang von der oberen Transportebene auf die untere Transportebene umgedreht werden, sodass die in der oberen Transportebene oberhalb der Unterplattenanordnung angeordnete Oberplattenanordnung in der unteren Transportebene unterhalb der Unterplattenanordnung angeordnet ist.

In allen Ausführungsformen kann die Erfindung bevorzugt einen Backofen zur Herstellung von knusprig spröden Flachwaffeln oder Hohlwaffeln betreffen. Bei diesen Backöfen werden auf- und zuklappbare Backzangen durch einen beheizten Backraum eines Backofens geführt. Die knusprig spröde Konsistenz der Backprodukte resultiert aus dem Effekt, dass Backmassen oder Teige mit hohem Wasseranteil von etwa 50-70% unter hohem Druck ausgebacken werden. Dabei entweicht das Wasser der Backmasse in Form von Wasserdampf sehr rasch und hinterlässt dabei eine poröse, spröde Struktur. Um den Backprozess unter hohem Druck durchführen zu können, sind insbesondere Verriegelungsvorrichtungen vorgesehen. Über diese können die Backzangen verriegelt werden, sodass sich im Inneren ein Überdruck aufbauen kann. Nur durch diesen Überdruck kann der gewünschte Backverlauf erzielt werden. Die Verriegelungsvorrichtungen sind bevorzugt an den Backzangen vorgesehen und im oder nach dem Schließbereich betätigt.

Gegebenenfalls ist vorgesehen, dass zumindest eine als Strahlungsheizvorrichtung ausgebildete obere Heizvorrichtung und zumindest eine als Strahlungsheizvorrichtung ausgebildete untere Heizvorrichtung vorgesehen sind, in denen jeweils ein Brenngemisch, enthaltend Primärsauerstoff und einen Brennstoff, verbrannt wird.

In allen Ausführungsformen kann die Backmasse eine flüssige oder eine flüssig-pastöse Konsistenz aufweisen.

Gegebenenfalls ist vorgesehen, dass die obere Heizvorrichtung im oberen Backbereich und oberhalb der oberen Transportebene angeordnet ist und zur Beheizung der Backform von oben auf die Rückenfläche der Oberplattenanordnung gerichtet ist.

Gegebenenfalls ist vorgesehen, dass die untere Heizvorrichtung im unteren Backbereich zwischen der oberen Transportebene und der unteren Transportebene angeordnet ist und zur Beheizung der Backform von oben auf die Rückenfläche der Unterplattenanordnung gerichtet ist.

Gegebenenfalls ist vorgesehen, dass die Heizvorrichtungen jeweils einen porösen Körper an ihrer Unterseite aufweisen, in dem und/oder an dessen Oberfläche das Brenngemisch verbrannt wird und bevorzugt im Wesentlichen flammenfrei verbrannt wird, und dass der poröse Körper beispielsweise ein Metallgewebe, ein Drahtgewebe oder ein Metallgeflecht ist oder enthält.

Gegebenenfalls ist vorgesehen, dass eine Fördervorrichtung, wie insbesondere ein Gebläse, zur Zuführung des Brenngemisches an eine Heizvorrichtung vorgesehen ist, und dass über Steuerung und/oder Regelung der Fördervorrichtung die Heizleistung der Heizvorrichtung veränderbar ist und bevorzugt, dass die obere Heizvorrichtung mit einer oberen Fördervorrichtung und die untere Heizvorrichtung mit einer unteren Fördervorrichtung verbunden ist, sodass die Heizleistungen der oberen Heizvorrichtung und der unteren Heizvorrichtung getrennt voneinander veränderbar, insbesondere getrennt steuerbar oder getrennt regelbar, sind.

Gegebenenfalls ist vorgesehen, dass mehrere obere Heizvorrichtungen und/oder mehrere untere Heizvorrichtungen vorgesehen sind und bevorzugt, dass die Heizleistungen der oberen Heizvorrichtungen und der unteren Heizvorrichtungen getrennt voneinander veränderbar, insbesondere getrennt steuerbar oder getrennt regelbar, sind oder bevorzugt, dass die Heizleistungen zweier oberer Heizvorrichtungen getrennt voneinander veränderbar, insbesondere getrennt steuerbar oder getrennt regelbar, sind oder bevorzugt, dass die Heizleistungen zweier unterer Heizvorrichtungen getrennt voneinander veränderbar, insbesondere getrennt steuerbar oder getrennt regelbar, sind.

Gegebenenfalls ist vorgesehen, dass die Abzugsöffnung entlang der Konvektionsströmungsrichtung des Backraumgases entfernt von den Heizvorrichtungen angeordnet ist, sodass das heiße aufsteigende Backraumgas in horizontaler Richtung durch den Backraum geleitet wird, bevor es durch die Abzugsöffnung austritt.

Gegebenenfalls ist vorgesehen, dass eine obere Heizvorrichtung und eine untere Heizvorrichtung im Bereich des hinteren Umlenkbereiches der Backzangenkette und/oder unmittelbar vor und nach dem hinteren Umlenkbereich angeordnet sind.

Gegebenenfalls ist vorgesehen, dass die Wände des Backraums vollständig oder teilweise mit einer Wärmeisolierung versehen sind.

Gegebenenfalls ist vorgesehen, dass der Backraum an seiner Unterseite im Wesentlichen geschlossen ist und an seiner Unterseite mit einer Wärmeisolierung versehen ist, wobei der Backraum gegebenenfalls an der Unterseite eine Öffnung aufweist, wobei diese Öffnung bevorzugt weniger als zehn Prozent der Fläche der geschlossenen Unterseite des Backraums einnimmt.

Gegebenenfalls ist vorgesehen, dass der Backraum eine Heizzone umfasst, in der zumindest eine Heizvorrichtung vorgesehen ist und in der die Backzangen durch direkte Einwirkung der Wärmestrahlung der Heizvorrichtung beheizt werden.

Gegebenenfalls ist vorgesehen, dass der Backraum eine strahlungsheizungsfreie Zone umfasst, in der entlang der oberen Transportebene und/oder entlang der unteren Transportebene keine direkte Beheizung der Backzangen durch die Strahlung der Heizvorrichtung vorgesehen ist und in der die Backzangen durch Einwirkung der Konvektionswärme des in Konvektionsströmungsrichtung bewegten heißen Brennraumgases beheizt werden.

Gegebenenfalls ist vorgesehen, dass die Abzugsöffnung in einer strahlungsheizungsfreien Zone des Backraums vorgesehen ist.

Gegebenenfalls ist vorgesehen, dass entlang der Konvektionsströmung zuerst die Einmündung des ersten Konvektionsgebläseauslasses, dann ein Bereich des Brennraums, in dem die oder eine Heizanordnung vorgesehen ist, und dann der Abzug durchströmt werden, wobei insbesondere zwischen dem Bereich des Brennraums, in dem die oder eine Heizanordnung vorgesehen ist, und dem Abzug ein Konvektionsbereich vorgesehen ist, in dem keine Heizanordnung, also eine strahlungsheizungsfreie Zone des Backraums, vorgesehen ist.

Gegebenenfalls ist vorgesehen, dass die Konvektionsströmung im Backraum entlang der Hauptbewegungsrichtung der Backzangen und insbesondere im Wesentlichen waagrecht verläuft, bevor sie aus dem Abzug austritt.

Gegebenenfalls ist vorgesehen, dass die Regulieranordnung auch zur Regelung der Backraumtemperatur geeignet oder eingerichtet ist.

Gegebenenfalls ist vorgesehen, dass die Regulieranordnung mindestens einen Sensor, wie insbesondere einen Temperatursensor, einen Drucksensor, einen Feuchtigkeitssensor und/oder einen Sensor zur Bestimmung eines Volumenstroms der Konvektionsströmung umfasst. Gegebenenfalls ist vorgesehen, dass die Regulieranordnung mindestens einen Sensor zur Regelung der Backzangentemperatur umfasst, wobei der Sensor bevorzugt als berührungsloser Temperatursensor ausgebildet ist.

Gegebenenfalls ist vorgesehen, dass das Konvektionsgebläse ein Gasgebläse und insbesondere ein Luftgebläse ist, über das zur Erzeugung künstlicher Konvektion gesteuert oder geregelt Gas eingebracht wird, wobei das Gas nicht der Verbrennung des Brennstoffs der Heizanordnung, sondern bevorzugt ausschließlich der Erzeugung einer Konvektionsströmung dient.

Gegebenenfalls ist vorgesehen, dass der Backraum mit einer Wärmeisolierung versehen ist.

Als Heizmodul wird insbesondere eine räumlich abgegrenzte, bevorzugt eigenständige, Heizvorrichtung definiert, die insbesondere als ein einziger Bauteil modular mit dem Backofen verbunden werden kann. Beispielsweise ist ein Heizmodul ein Strahlungsbrenner oder mehrere über einen gemeinsamen Tragrahmen miteinander verbundene Strahlungsbrenner. Bevorzugt kann das Heizmodul eigenständig gesteuert oder geregelt werden, sodass die Heizleistung des Heizmoduls individuell angepasst werden kann.

Entlang der Längsrichtung des Backofens sind bevorzugt mehrere Heizmodule vorgesehen. Um eine Konvektionsströmung zu erzeugen, die einen verbesserten Betrieb des Backofens ermöglicht, sind bevorzugt auch mehrere Konvektionsgebläseauslässe vorgesehen.

Gegebenenfalls ist vorgesehen, dass entlang der Konvektionsströmung vor jedem Heizmodul ein Konvektionsgebläseauslass vorgesehen ist. Dadurch wird bewirkt, dass die durch das Heizmodul bewirkte Querströmung die in Längsrichtung verlaufende Konvektionsströmung nicht beeinträchtigt. Darüber hinaus kann dadurch eine verbesserte Konvektionsströmung erzeugt werden. Insbesondere kann der aus jedem Konvektionsgebläseauslass austretende Volumenstrom separat gesteuert oder geregelt werden. Jeder Konvektionsgebläseauslass kann mehrere Auslassdüsen umfassen.

Alternativ hierzu kann vorgesehen sein, dass nicht vor jedem Heizmodul, sondern nur vor ausgewählten Heizmodulen je ein Konvektionsgebläseauslass angeordnet ist. So kann entlang der Konvektionsströmung zwischen dem ersten Heizmodul und zweiten Heizmodul ein Heizmodul vorhanden sein, vor dem kein eigener Konvektionsgebläseauslass angeordnet ist. Insbesondere muss gemäß dieser Ausführungsform nicht vor jedem Heizmodul ein Konvektionsgebläseauslass vorgesehen sein. Auch hierdurch wird bewirkt, dass die durch das Heizmodul bewirkte Querströmung die in Längsrichtung verlaufende Konvektionsströmung nicht beeinträchtigt. Gegebenenfalls ist daher zwischen dem ersten Heizmodul und dem zweiten Heizmodul ein Heizmodul vorgesehen, vor dem kein Konvektionsgebläseauslass vorgesehen ist. Gegebenenfalls ist zwischen dem zweiten Heizmodul und dem weiteren Heizmodul ein Heizmodul vorgesehen, vor dem kein Konvektionsgebläseauslass vorgesehen ist.

Bevorzugt werden die aus den Konvektionsgebläseauslässen austretenden Volumenströme derart gesteuert, dass eine durchgehende, den gesamten Backraum durchströmende, insbesondere konstante oder sich beschleunigende, Konvektionsströmung erzeugt wird.

Die Konvektionsströmung durchströmt bevorzugt den gesamten Backraum über mehrere Heizmodule hinweg und mündet in einen Abzug. Die Konvektionsströmung durchströmt bevorzugt den gesamten Backraum. Dadurch wird eine durchgehende Backzone mit einer durchgehenden Konvektionsströmung gebildet.

Bevorzugt sind die Konvektionsgebläseauslässe zur Erzeugung der Konvektionsströmung in Längsrichtung und Richtung Abzug gerichtet. Die Konvektionsgebläseauslässe sind somit alle in jene Richtung ausgerichtet, in die auch die Konvektionsströmung verläuft. Gegebenenfalls können die Auslässe in allen Ausführungsformen schräg zur Konvektionsströmung ausgerichtet sein. Insbesondere können die Konvektionsgebläseauslässe jeweils eine oder mehrere Auslassdüsen umfassen. Durch diese Auslassdüsen kann die Richtung des austretenden Gases bestimmt werden.

Bevorzugt verlaufen die Backzangen über weite Strecken entlang einer oberen und entlang einer unteren Transportebene. Zur Beheizung der Backzangen sind bevorzugt oberhalb der oberen Transportebene und zwischen der oberen und der unteren Transportebene jeweils mehrere Heizmodule vorgesehen. Die Heizmodule sind bevorzugt jeweils von oben auf die entsprechenden Backzangen bzw. auf die entsprechenden Bereiche gerichtet, in denen die Backzangen entlang des Endlosförderers transportiert werden. Bevorzugt ist vorgesehen, dass entlang der Längsrichtung zwischen zwei Heizmodulen einer Transportebene ein Konvektionsgebläseauslass vorgesehen ist. Insbesondere ist entlang der Konvektionsströmung vor jedem Heizmodul ein in Konvektionsströmungsrichtung wirkender oder gerichteter Konvektionsgebläseauslass vorgesehen.

Die Konvektionsgebläseauslässe sind dazu eingerichtet, einen Volumenstrom zur Erzeugung einer Konvektionsströmung auszugeben. Zur Erzeugung dieses Volumenstroms ist bevorzugt ein Gebläse vorgesehen. Als Quelle für den Volumenstrom kann beispielsweise Umgebungsluft durch den Konvektionsgebläseauslass ausgegeben werden. Alternativ oder zusätzlich kann auch das im Backraum befindliche Gas bzw. aus dem Backraum entnommenes Gas zugeführt werden. Insbesondere kann auch vorgesehen sein, dass ein entlang der Längsrichtung zwischen zwei Heizmodulen angeordneter Konvektionsgebläseauslass durch einen Ventilator gebildet ist, der im Backraum angeordnet ist.

In weiterer Folge wird die Erfindung anhand der Figuren und anhand konkreter Ausführungsbeispiele weiter beschrieben.

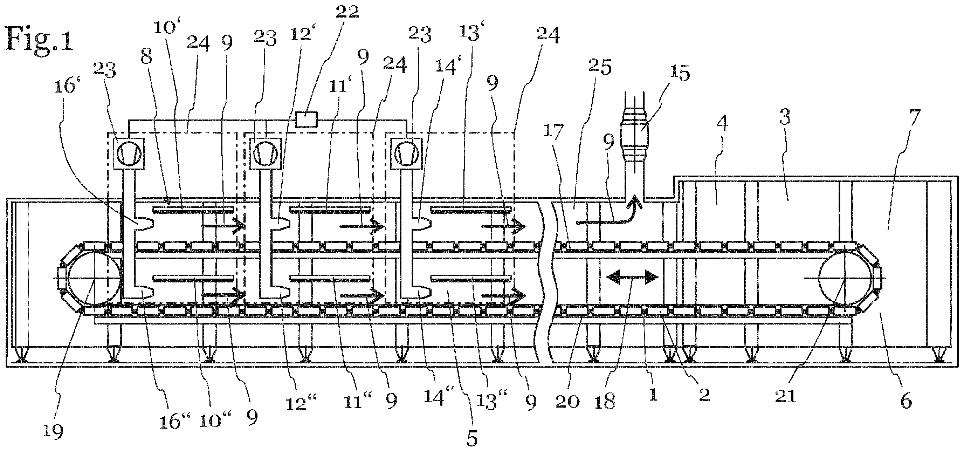

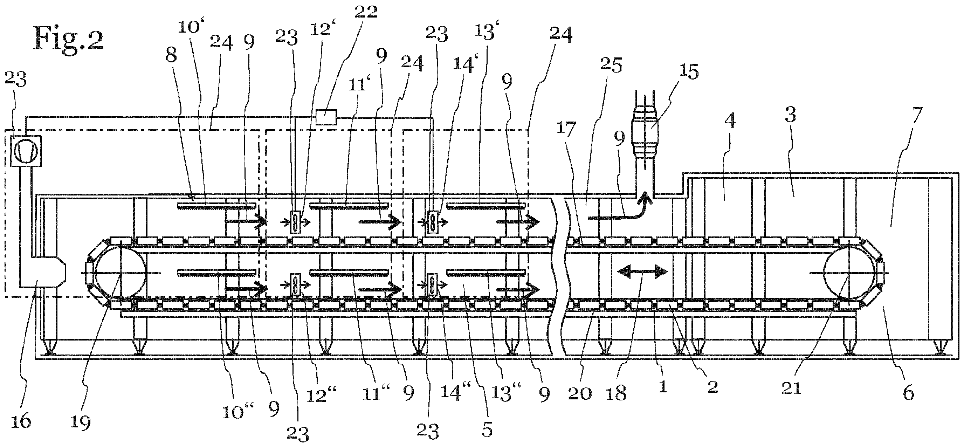

Die Figuren 1 und 2 zeigen schematische Schnittdarstellungen zweier unterschiedlicher Ausführungsformen erfindungsgemäßer Backöfen.

Wenn nicht anders angegeben, so entsprechen die Bezugszeichen in den Figuren folgenden Komponenten:
Endlosförderer 1, Backzange 2, Backmassenauftragsbereich 3, Schließbereich 4, Backraum 5, Öffenbereich 6, Backproduktentnahmebereich 7, Heizanordnung 8, Konvektionsströmung 9, erstes Heizmodul 10, zweites Heizmodul 11, zweiter Konvektionsgebläseauslass 12, weiteres Heizmodul 13, weiterer Konvektionsgebläseauslass 14, Abzug 15, erster Konvektionsgebläseauslass 16, obere Transportebene 17, Längsrichtung 18, hinterer Umlenkbereich 19, untere Transportebene 20, vorderer Umlenkbereich 21, Regulieranordnung 22, Gebläse 23, Konvektionsheizmodul 24, beheizungsfreier Bereich 25.

Figur 1 zeigt eine schematische Schnittdarstellung einer Ausführungsform eines erfindungsgemäßen Backofens. Der Backofen umfasst einen Endlosförderer 1, an dem mehrere Backzangen 2 angebracht sind. Diese Backzangen 2 werden durch Bewegung des Endlosförderers 1 nacheinander durch einen Backmassenauftragsbereich 3 zum Auftrag einer Backmasse auf die geöffneten Backzangen 2, durch einen Schließbereich 4 zum Schließen der Backzangen 2, durch einen Backraum 5 zum Backen der Backprodukte in den geschlossenen Backzangen 2, durch einen Öffenbereich 6 zum Öffnen der Backzangen 2, durch einen Backproduktentnahmebereich 7 zur Entnahme der Backprodukte aus den geöffneten Backzangen 2 und wieder zu Backmassenauftragsbereich 3 gefördert, wo der Prozess von vorne beginnen kann.

Der Endlosförderer 1 und/oder die Backzangen 2 verlaufen in Längsrichtung 18 entlang einer oberen Transportebene 17 bis zu einem hinteren Umlenkbereich 19, in dem der Endlosförderer 1 und/oder die Backzangen 2 von der oberen Transportebene 17 auf eine untere Transportebene 20 umgelenkt werden, weiter entlang der unteren Transportebene 20 bis zu einem vorderen Umlenkbereich 21, in dem der Endlosförderer 1 und die Backzangen 2 wieder auf die obere Transportebene 17 umgelenkt werden.

Auf einer Seite des Backraums 5, entlang der Längsrichtung 18 betrachtet, ist ein erster Konvektionsgebläseauslass 16 vorgesehen. Auf der anderen Seite des Backraums 5, entlang der Längsrichtung 18 betrachtet, ist ein Abzug 15 angeordnet. Ausgehend von dem ersten Konvektionsgebläseauslass 16 wird der Backraum 5 von einer Konvektionsströmung 9 durchströmt. Die Konvektionsströmung 9 verläuft im Wesentlichen entlang der Längsrichtung 18.

Zwischen dem ersten Konvektionsgebläseauslass 16 und dem Abzug 15 ist im Backraum 5 eine Heizanordnung 8 vorgesehen. Die Heizanordnung 8 umfasst mehrere Heizmodule 10, 11, 13. Insbesondere sind entlang der Konvektionsströmung 9 nacheinander ein erstes oberes Heizmodul 10', ein zweites oberes Heizmodul 11' und in dieser Ausführungsform auch ein weiteres oberes Heizmodul 13` angeordnet. Diese oberen Heizmodule 10', 11', 13' sind als Strahlungsheizvorrichtungen ausgebildet und von oben auf den Endlosförderer 1 bzw. auf die Backzangen 2 gerichtet. Die oberen Heizmodule 10', 11', 13' sind hierzu oberhalb der oberen Transportebene 17 vorgesehen.

In der vorliegenden Ausführungsform sind ferner entlang der Konvektionsströmung 9 nacheinander ein erstes unteres Heizmodul 10", ein zweites unteres Heizmodul 11" und in dieser Ausführungsform auch ein weiteres unteres Heizmodul 13" angeordnet. Diese unteren Heizmodule 10", 11", 13" sind ebenfalls als Strahlungsheizvorrichtungen ausgebildet, und von oben auf den Endlosförderer 1 bzw. auf die Backzangen 2 gerichtet. Die unteren Heizmodule 10", 11", 13" sind jedoch zwischen der oberen Transportebene 17 und der untere Transportebene 20 vorgesehen.

Zwischen dem ersten Heizmodul 10 und dem zweiten Heizmodul 11 ist erfindungsgemäß ein zweiter Konvektionsgebläseauslass 12 vorgesehen. In der vorliegenden Ausführungsform ist zwischen dem ersten oberen Heizmodul 10` und dem zweiten oberen Heizmodul 11' ein zweiter oberer Konvektionsgebläseauslass 12' vorgesehen. Ferner ist zwischen dem ersten unteren Heizmodul 10" und dem zweiten unteren Heizmodul 11" ein zweiter unterer Konvektionsgebläseauslass 12" vorgesehen.

In der vorliegenden Ausführungsform ist zwischen dem zweiten oberen Heizmodul 11' und dem weiteren oberen Heizmodul 13' ein weiterer oberer Konvektionsgebläseauslass 14' vorgesehen. Ferner ist zwischen dem zweiten unteren Heizmodul 11" und dem weiteren unteren Heizmodul 13" ein weiterer unterer Konvektionsgebläseauslass 14" vorgesehen.

Die zweiten Konvektionsgebläseauslässe 12 sind dazu eingerichtet, die Konvektionsströmung 9 aufrecht zu erhalten und/oder zu verstärken. Hierzu weisen die Konvektionsgebläseauslässe 12, 14, 16 im Wesentlichen entlang der Längsrichtung 18 bzw. entlang der Konvektionsströmung 9 Richtung Abzug 15.

Durch diese Konfiguration wird eine gleichmäßige, durchgehende Konvektionsströmung 9 erzeugt, die den Backraum 5 entlang der Längsrichtung 18 durchströmt, um dann aus dem Abzug 15 auszutreten.

Die Richtung der Konvektionsströmung 9 ist in der vorliegenden Ausführungsform der Transportrichtung der Backzangen 2 bzw. des Endlosförderers 1 entlang der oberen Transportebene 17 entgegengesetzt. Dadurch wird die durch die Konvektionsströmung 9 transportierte Wärmeenergie im Gegenstromprinzip auf die Backzangen 2 übertragen. Die Backzangen 2 hingegen werden im Backmassenauftragsbereich 3 mit einer verhältnismäßig kühlen Backmasse beschickt und dadurch zumindest lokal gekühlt. Durch die Wärmeübertragung zwischen der Konvektionsströmung 9 und den Backzangen 2 kann die Effizienz des Backofens weiter verbessert werden.

Bevorzugt umfasst jeder Konvektionsgebläseauslass 12, 14, 16 mindestens eine Auslassdüse, die dazu geeignet und/oder eingerichtet ist, die Richtung des ausgegebenen Volumenstroms zu bestimmen.

In der Ausführungsform der Figur 1 sind mehrere Gebläse 23 vorgesehen. Jedes Gebläse 23 der vorliegenden Ausführungsform mit je einem oberen Konvektionsgebläseauslass 12', 14', 16' und einem unteren Konvektionsgebläseauslass 12", 14", 16" verbunden.

Gemäß der vorliegenden Ausführungsform kann eine Regulierungsanordnung 22 vorgesehen sein, über die der von den Konvektionsgebläseauslässen 12, 14, 16 ausgegebene Volumenstrom einzeln oder gruppenweise beeinflusst, insbesondere gesteuert oder geregelt, werden kann. So sind die Gebläse 23 in der vorliegenden Ausführungsform als steuerbare bzw. regelbare Gebläse 23 ausgebildet, wobei die Förderleistung über die Reguliereranordnung 22 gesteuert oder geregelt werden kann. Ein Regelkreis kann in allen Ausführungsformen insbesondere über eine Volumenstrombilanz gebildet werden, der alle eingebrachten Volumenströmen und alle austretenden Volumenströmen bilanziert, um eine verbesserte Konvektionsströmung 9 zu erhalten. Als Regelgröße kann beispielsweise auch die Backraumtemperatur an unterschiedlichen Stellen des Backraums 5 oder die Backzangentemperatur herangezogen werden.

Alternativ oder zusätzlich kann die Regulieranordnung 22 in allen Ausführungsformen gegebenenfalls Durchflussregler zur Veränderung des durch die Konvektionsgebläseauslässe 12, 14,16 ausgegebenen Volumenstroms enthalten. Derartige Durchflussregler können beispielsweise steuerbare Schieber, Blenden, Ventile oder Drosseln sein.

Die Gebläse 23 sind in der vorliegenden Ausführungsform außerhalb des Backraums 5 angeordnet und saugen Umgebungsluft an, um diese Umgebungsluft durch die Konvektionsgebläseauslässe 12, 14, 16 in den Backraum 5 einzubringen. Gegebenenfalls kann die angesaugte Umgebungsluft vor dem Einbringen in den Backraum 5 vorgewärmt werden. Diese Vorwärmung kann beispielsweise durch einen Wärmetauscher geschehen, der als Wärmemedium beispielsweise die abgeleitete Wärme des Abzugs 15 nutzt.

Um den Durchsatz eines erfindungsgemäßen Backofens zu erhöhen, also die pro Zeiteinheit herstellbare Menge an Backprodukten zu erhöhen, kann die Zahl der Backzangen 2 erhöht werden. Jedoch muss zur Erhöhung der Zahl der Backzangen 2 auch die Länge des Backofens entlang der Längsrichtung 18 erhöht werden. Zusätzlich muss auch die durch die Heizanordnung 8 eingebrachte Wärmemenge bzw. Heizleistung erhöht werden. Zu diesem Zweck ist der Backofen bevorzugt modular aufgebaut und weist mehrere Konvektionsheizmodule 24 auf.

Ein Konvektionsheizmodul 24 umfasst zumindest ein Heizmodul 10, 11, 13 und einen Konvektionsgebläseauslass 12, 14, 16, wobei der Konvektionsgebläseauslass 12, 14, 16 entlang der Konvektionsströmung 9 vor dem zugehörigen Heizmodul 10, 11, 13 angeordnet ist. In der vorliegenden Ausführungsform umfasst ein Konvektionsheizmodul 24 zwei Heizmodule 10, 11, 13, insbesondere ein oberes Heizmodul 10', 11', 13' und ein unteres Heizmodul 10", 11", 13" sowie zwei Konvektionsgebläseauslässe 12, 14, 16, insbesondere einen oberen Konvektionsgebläseauslass 12', 14', 16' und einen unteren Konvektionsgebläseauslass 12", 14", 16". Auch das für die Konvektionsgebläseauslässe 12, 14, 16 dieses Konvektionsheizmoduls 24 zuständige Gebläse 23 kann ein Teil des Konvektionsheizmoduls 24 sein.

Optional kann auch das Gehäuse im Bereich des Konvektionsheizmoduls 24 als Teil des Konvektionsheizmoduls 24 angesehen werden. Dieses Gehäuse kann beispielsweise als selbsttragendes und/oder selbststehendes Gehäuse ausgebildet sein. Durch eine derartige Ausgestaltung kann der Backofen durch Aneinanderreihung mehrerer gleichartiger Konvektionsheizmodule 24 erweitert werden.

Entlang der Konvektionsströmung 9 sind zuerst die Heizanordnung 8 in einer beheizten Zone, dann ein beheizungsfreier Bereich 25 und dann der Abzug 15 vorgesehen.

Figur 2 zeigt eine weitere Ausführungsform eines erfindungsgemäßen Backofens, die sich durch die Ausgestaltung der Komponenten zur Erzeugung der Konvektionsströmung 9 von der Ausführungsform der Figur 1 unterscheidet. Der grundsätzliche Aufbau der Ausführungsform der Figur 2 stimmt jedoch mit dem grundsätzlichen Aufbau der Ausführungsform der Figur 1 überein.

Im Gegensatz zur Ausführungsform der Figur 1 sind die Gebläse 23 der Ausführungsform der Figur 2 innerhalb des Backraums 5 angeordnet. Insbesondere sind die Gebläse 23 als Ventilatoren ausgebildet, deren Quelle zur Erzeugung des aus den Konvektionsgebläseauslässen 12, 14, 16 austretenden Volumenstroms das im Backraum 5 befindliche Gas ist. Lediglich jenes Gebläse 23, das mit dem ersten Konvektionsgebläseauslass 16 verbunden ist, ist ein außerhalb des Backraums 5 angeordnetes Gebläse 23, das Umgebungsluft und gegebenenfalls vorgewärmte Umgebungsluft angesaugt. Durch diese Konfiguration wird durch die zweiten Konvektionsgebläseauslässe 12 und die weiteren Konvektionsgebläseauslässe 14 kein Volumenstrom von außen in den Backraum 5 eingebracht, sondern lediglich die bereits im Backraum 5 herrschende Konvektionsströmung 9 unterstützt und weitergefördert. Auch bei der Ausführungsform der Figur 2 ist eine Regulieranordnung 22 vorgesehen, über die der aus den Konvektionsgebläseauslässen 12, 14, 16 austretende Volumenstrom gesteuert oder geregelt werden kann. Insbesondere kann jedes Gebläse 23 getrennt gesteuert oder geregelt werden.

In der Ausführungsform der Figur 2 sind zwei gleichartige Konvektionsheizmodule 24 vorgesehen.

In allen Ausführungsformen können entlang der Konvektionsströmung 9, insbesondere pro Transportebene 17, 20, zwei, drei, vier oder mehr Heizmodule 10, 11, 13 vorgesehen sein. In den vorliegenden Ausführungsformen sind je drei Heizmodule 10, 11, 13 pro Transportebene 17, 20, insbesondere ein erstes Heizmodul 10, ein zweites Heizmodul 11 und ein weiteres Heizmodul 13 vorgesehen. Gegebenenfalls können mehrere weitere Heizmodule 13 vorgesehen sein, wodurch sich die Länge des Backofens und bei Erhöhung der Anzahl der Backzangen 2 auch der Durchsatz erhöhen. Diese Erweiterung kann, wie beschrieben, durch eine modulare Erweiterung durch die Konvektionsheizmodule 24 erfolgen.

In allen Ausführungsformen kann zur Herstellung gebackener Produkte folgendes Verfahren angewendet werden:

In dem Backofen wird ein Endlosförderer 1 bewegt, der offenbare und schließbare Backzangen 2 trägt. Die Backzangen 2 werden nacheinander durch die oben genannten Bereiche des Backofens befördert. An einer Seite des Backraums 5 des Backofens, insbesondere im hinteren Umlenkbereich 19, wird durch einen ersten Konvektionsgebläseauslass 16 ein erster Gasvolumenstrom eingebracht. Dieser erste Gasvolumenstrom dient der Bildung oder der Unterstützung einer entlang der Längsrichtung 18 bis zum Abzug 15 verlaufenden Konvektionsströmung 9.

Das entlang der Konvektionsströmung 9 strömende Backraumgas wird in weiterer Folge durch mindestens ein erstes Heizmodul 10 erwärmt. In allen Ausführungsformen ist bevorzugt vorgesehen, dass die Heizmodule 10, 11, 13 als Strahlungsheizmodule ausgebildet sind, wobei die Heizmodule 10, 11,13 bevorzugt in allen Ausführungsformen als in den Backraum 5 ragende oder im Backraum 5 vorgesehenen Strahlungsheizvorrichtungen ausgebildet sind. Durch das Heizmodul wird dem entlang der Konvektionsströmung 9 strömenden Backraumgas ein Heizgasvolumenstrom beigemengt. Dieser Heizgasvolumenstrom kann beispielsweise das Abgas des Heizmoduls sein. Der erste Heizgasvolumenstrom wird insbesondere quer zur Konvektionsströmung 9 eingebracht.

In weiterer Folge passiert das entlang der Konvektionsströmung 9 strömende Backraumgas den zweiten Konvektionsgebläseauslass 12. Durch diesen zweiten Konvektionsgebläseauslass 12 wird das entlang der Konvektionsströmung 9 strömende Backraumgas weitergefördert. Diese Weiterförderung geschieht beispielsweise durch die Beimengung eines zweiten Gasvolumenstroms entlang der Richtung der Konvektionsströmung 9 oder durch eine mechanische Weiterförderung des Backraumgases durch ein als Ventilator ausgebildetes Gebläse 23.

Anschließend passiert das entlang der Konvektionsströmung 9 strömende Backraumgas mindestens ein zweites Heizmodul 11. Dieses zweite Heizmodul 11 erwärmt das strömende Backraumgas und mengt dem Backraumgas einen zweiten Heizgasvolumenstrom bei, wobei auch dieser Heizgasvolumenstrom quer zur Konvektionsströmung 9 eingebracht wird.

Anschließend durchströmt das Backraumgas den Backraum 5, wobei in diesem Backraum 5 gegebenenfalls noch weitere Heizmodule 13 und bevorzugt auch eine beheizungsfreie Zone 25 vorgesehen ist oder sind. Anschließend tritt das entlang der Konvektionsströmung 9 strömende Backraumgas in den Abzug 15 ein und tritt bevorzugt auch durch den Abzug 15 aus der Backmaschine aus. Gegebenenfalls wird ein Teilstrom des durch den Abzug 15 austretenden Backraumgases rezirkuliert und wieder in den Backraum 5 eingebracht - beispielsweise durch einen der Konvektionsgebläseauslässe 12, 14, 16.

Im Verlauf der Konvektionsströmung 9 werden dem Backraumgas im Backraum 5 bevorzugt weitere Volumenströme hinzugefügt. Jedoch werden im Verlauf der Konvektionsströmung 9 keine Volumenströme abgeführt. So wird die gesamte Konvektionsströmung 9 durch den auf einer Seite des Backraums 5 angeordneten Abzug 15 abgeführt.

Hierdurch wird eine optimale Ausnutzung der in der Konvektionsströmung 9 befindlichen Wärmeenergie ermöglicht. Die Strömung wird so lange wie möglich entlang des Endlosförderers 1 und entlang der Backplatten geführt, um die Heizwärme an diese Komponenten abgeben zu können. Bevorzugt ist die Geschwindigkeit der Konvektionsströmung 9 in allen Ausführungsformen derart gewählt, insbesondere derart gesteuert und/oder geregelt, dass die Oberflächen der Backzangen 2 im Bereich des Abzugs 15 im Wesentlichen die selbe Temperatur aufweisen, wie das Backraumgas der Konvektionsströmung 9 im Bereich des Abzugs 15. Dies bedeutet, dass im Wesentlichen die gesamte übertragbare Wärme der Konvektionsströmung 9 auf die Backzangen 2 abgegeben wurde. Bevorzugt werden die Backzangen 2 entlang ihrer oberen Transportebene 17 gegen die Richtung der Konvektionsströmung 9 geführt. Dadurch geschieht die Wärmeübertragung nach dem Gegenstromprinzip.

## Patentansprüche

1. Backofen zum Herstellen gebackener, bevorzugt essbarer, Produkte, umfassend einen entlang einer Längsrichtung (18) verlaufenden Endlosförderer (1) und mehrere entlang des Endlosförderers (1) vorgesehene offenbare und schließbare Backzangen (2), die aneinandergereiht jeweils nacheinander:
- einen Backmassenauftragsbereich (3) zum Auftrag einer Backmasse auf eine geöffnete Backzange (2),
- einen Schließbereich (4) zum Schließen der Backzangen (2),
- einen entlang des Endlosförderers (1) verlaufenden, länglichen Backraum (5) zum Backen der Backprodukte in den geschlossenen Backzangen (2), wobei in dem Backraum (5) mindestens eine Heizanordnung (8) zur Beheizung der im Backraum (5) befindlichen Backzangen (2) vorgesehen ist,
- einen Öffenbereich (6) zum Öffnen der Backzangen (2)
- und einen Backproduktentnahmebereich (7) zur Entnahme der gebackenen Produkte aus den geöffneten Backzangen (2) durchlaufen,
- wobei, entlang der Längsrichtung (18) betrachtet, an einer Seite des Backraums (5) ein Abzug (15) zur Abführung der Brennraumgase vorgesehen ist,
- wobei, entlang der Längsrichtung (18) betrachtet, an der anderen Seite des Backraums (5) ein erster Konvektionsgebläseauslass (16) zur Erzeugung einer entlang der Längsrichtung (18) bis zum Abzug (15) verlaufenden Konvektionsströmung (9) vorgesehen ist,
- und wobei zwischen dem ersten Konvektionsgebläseauslass (16) und dem Abzug (15) entlang der Längsrichtung (18) betrachtet mehrere als Strahlungsheizvorrichtungen ausgebildete Heizmodule (10, 11, 13) der Heizanordnung (8) angeordnet sind,
**dadurch gekennzeichnet,**
- **dass**, entlang der Längsrichtung (18) betrachtet, zwischen einem ersten Heizmodul (10) und einem zweiten Heizmodul (11) ein zweiter Konvektionsgebläseauslass (12) zur Erzeugung einer entlang der Längsrichtung (18) bis zum Abzug (15) verlaufenden Konvektionsströmung (9) vorgesehen ist.

2. Backofen nach Anspruch 1, **dadurch gekennzeichnet,**
- **dass** der zweite Konvektionsgebläseauslass (12), insbesondere dessen Ausströmungsrichtung, entlang der Längsrichtung (18) Richtung Abzug (15) ausgerichtet ist,
- oder dass der zweite Konvektionsgebläseauslass (12), insbesondere dessen Ausströmungsrichtung, ausschließlich Richtung Abzug (15) ausgerichtet ist.

3. Backofen nach einem der Ansprüche 1 oder 2, **dadurch gekennzeichnet,**
- **dass** entlang der Längsrichtung (18) zwischen dem zweiten Heizmodul (11) und dem Abzug (15) mindestens ein weiteres Heizmodul (13) vorgesehen ist, und dass entlang der Längsrichtung (18) zwischen dem zweiten Heizmodul (11) und dem weiteren Heizmodul (13) ein weiterer Konvektionsgebläseauslass (14) zur Erzeugung einer entlang der Längsrichtung (18) bis zum Abzug (15) verlaufenden Konvektionsströmung (9) vorgesehen ist, wobei der weitere Konvektionsgebläseauslass (14), insbesondere dessen Ausströmungsrichtung, entlang der Längsrichtung (18) Richtung Abzug (15) ausgerichtet ist oder ausschließlich Richtung Abzug (15) ausgerichtet ist.

4. Backofen nach einem der Ansprüche 1-3, **dadurch gekennzeichnet, dass** entlang der Längsrichtung (18) nacheinander mehrere Heizmodule (10, 11, 13) vorgesehen sind, und dass entlang der Längsrichtung (18) zwischen den Heizmodulen (10, 11, 13) mehrere Konvektionsgebläseauslässe (12, 14, 16) zur Erzeugung einer entlang der Längsrichtung (18) bis zum Abzug (15) verlaufenden Konvektionsströmung (9) vorgesehen sind, die jeweils entlang der Längsrichtung (18) Richtung Abzug (15) ausgerichtet sind oder die ausschließlich Richtung Abzug (15) ausgerichtet sind.

5. Backofen nach einem der Ansprüche 1-4,
- wobei der Endlosförderer (1) oder zumindest die Backzangen (2) entlang einer oberen Transportebene (17) verlaufen, dann in einem hinteren Umlenkbereich (19) auf eine, unterhalb der oberen Transportebene (17) verlaufende, untere Transportebene (20) umgelenkt werden, dann weiter entlang der unteren Transportebene (20) verlaufen und in einem vorderen Umlenkbereich (21) wieder auf die obere Transportebene (17) umgelenkt werden, und wobei die obere Transportebene (17) und die untere Transportebene (20) entlang der Längsrichtung (18) verlaufen, **dadurch gekennzeichnet,**
- **dass** das erste Heizmodul (10), das zweite Heizmodul (11) und das gegebenenfalls vorgesehene weitere Heizmodul (13) oberhalb der oberen Transportebene (17) vorgesehen sind und von oben auf die entlang der oberen Transportebene (17) angeordneten Backzangen (2) gerichtet sind,
- **oder dass** das erste Heizmodul (10), das zweite Heizmodul (11) und das gegebenenfalls vorgesehene weitere Heizmodul (13) zwischen der oberen Transportebene (17) und der unteren Transportebene (20) vorgesehen sind und von oben auf die entlang der unteren Transportebene (20) angeordneten Backzangen (2) gerichtet sind.

6. Backofen nach einem der Ansprüche 1-4,
- wobei der Endlosförderer (1) oder zumindest die Backzangen (2) entlang einer oberen Transportebene (17) verlaufen, dann in einem hinteren Umlenkbereich (19) auf eine, unterhalb der oberen Transportebene (17) verlaufende, untere Transportebene (20) umgelenkt werden, dann weiter entlang der unteren Transportebene (20) verlaufen und in einem vorderen Umlenkbereich (21) wieder auf die obere Transportebene (17) umgelenkt werden, und wobei die obere Transportebene (17) und die untere Transportebene (20) entlang der Längsrichtung (18) verlaufen, **dadurch gekennzeichnet,**
- **dass** zwei erste Heizmodule (10), nämlich ein oberes erstes Heizmodul (10') und ein unteres erstes Heizmodul (10"), zwei zweite Heizmodule (11), nämlich ein oberes zweites Heizmodul (11') und ein unteres zweites Heizmodul (11 "), und gegebenenfalls zwei weitere Heizmodule (13), nämlich ein oberes weiteres Heizmodul (13') und ein unteres weiteres Heizmodul (13"), vorgesehen sind, wobei jeweils eines der beiden ersten (10), zweiten (11) und gegebenenfalls weiteren Heizmodule (13) oberhalb der oberen Transportebene (17) vorgesehen ist und von oben auf die entlang der oberen Transportebene (17) angeordneten Backzangen (2) gerichtet ist, und das jeweils andere Heizmodul (10, 11, 13) zwischen der oberen Transportebene (17) und der unteren Transportebene (20) vorgesehen ist und von oben auf die entlang der unteren Transportebene (20) angeordneten Backzangen (2) gerichtet ist.

7. Backofen nach Anspruch 6, **dadurch gekennzeichnet,**
- **dass**, entlang der Längsrichtung (18) betrachtet, zwischen dem ersten oberen Heizmodul (10') und dem zweiten oberen Heizmodul (11') ein zweiter oberer Konvektionsgebläseauslass (12') vorgesehen ist,
- und **dass** entlang der Längsrichtung (18) betrachtet zwischen dem ersten unteren Heizmodul (10") und dem zweiten unteren Heizmodul (11 ") ein zweiter unterer Konvektionsgebläseauslass (12") vorgesehen ist.

8. Backofen nach einem der Ansprüche 6 oder 7, **dadurch gekennzeichnet,**
- **dass** entlang der Längsrichtung (18) zwischen dem zweiten oberen Heizmodul (11') und dem Abzug (15) mindestens ein weiteres oberes Heizmodul (13') vorgesehen ist,
- **dass** entlang der Längsrichtung (18) zwischen dem zweiten oberen Heizmodul (11') und dem weiteren oberen Heizmodul (13') ein weiterer oberer Konvektionsgebläseauslass (14') vorgesehen ist, wobei der weitere obere Konvektionsgebläseauslass (14'), insbesondere dessen Ausströmungsrichtung, entlang der Längsrichtung (18) Richtung Abzug (15) gerichtet ist,
- **dass** entlang der Längsrichtung (18) zwischen dem zweiten unteren Heizmodul (11 ") und dem Abzug (15) mindestens ein weiteres unteres Heizmodul (13") vorgesehen ist,
- und **dass** entlang der Längsrichtung (18) zwischen dem zweiten unteren Heizmodul (11 ") und dem weiteren unteren Heizmodul (13") ein weiterer unterer Konvektionsgebläseauslass (14") vorgesehen ist, wobei der weitere untere Konvektionsgebläseauslass (14"), insbesondere dessen Ausströmungsrichtung, entlang der Längsrichtung (18) Richtung Abzug (15) gerichtet ist.

9. Backofen nach einem der Ansprüche 1-8, **dadurch gekennzeichnet, dass** der Abzug (15) entlang der durch die Konvektionsgebläseauslässe (12, 14, 16) erzeugten Konvektionsströmung (9) nach der Heizanordnung (8) und insbesondere nach allen Heizmodulen (10, 11, 13) vom Backraum (5) abzweigt.

10. Backofen nach einem der Ansprüche 1-9, **dadurch gekennzeichnet,**
- **dass** eine Regulieranordnung (22) zur separaten oder gruppenweisen Steuerung oder Regelung der durch die Konvektionsgebläseauslässe (12, 14, 16) ausgegebenen Volumenströme vorgesehen ist,
- wobei die Regulieranordnung (22) Durchflussregler zur Veränderung der durch die Konvektionsgebläseauslässe (12, 14, 16) ausgegebenen Volumenströme umfasst,
- und/oder wobei die Regulieranordnung (22) steuerbare oder regelbare Gebläse (23) zur Veränderung der durch die Konvektionsgebläseauslässe (12, 14, 16) ausgegebenen Volumenströme umfasst.

11. Backofen nach einem der Ansprüche 1-10, **dadurch gekennzeichnet, dass** ein oder jeder Konvektionsgebläseauslass (12, 14, 16) eine oder mehrere Auslassdüsen umfasst.

12. Backofen nach einem der Ansprüche 1-11, **dadurch gekennzeichnet, dass** der durch die Konvektionsgebläseauslässe (12, 14, 16) ausgegebene Volumenstrom, gegebenenfalls vorgewärmte, Umgebungsluft und/oder im Backraum (5) befindliches oder aus dem Backraum (5) entnommenes Backraumgas ist.

13. Backofen nach einem der Ansprüche 1-12, **dadurch gekennzeichnet,**
- **dass** der mindestens eine zweite Konvektionsgebläseauslass (12) und der gegebenenfalls vorgesehenen mindestens eine weitere Konvektionsgebläseauslass (14) jeweils mit einem außerhalb des Backraums (5) angeordneten Gebläse (23) verbunden sind, wobei dem Gebläse (23) Umgebungsluft oder aus dem Backraum (5) entnommenes Backraumgas zugeführt ist,
- oder dass der mindestens eine zweite Konvektionsgebläseauslass (12) und der gegebenenfalls vorgesehenen mindestens eine weitere Konvektionsgebläseauslass (14) jeweils mit einem innerhalb des Backraums (5) angeordneten, als Ventilator wirkenden, Gebläse (23) verbunden sind, wobei dem Gebläse (23) im Backraum (5) befindliches Backraumgas zugeführt ist.

14. Backofen nach einem der Ansprüche 1-13, **dadurch gekennzeichnet, dass** mindestens ein Konvektionsheizmodul (24) vorgesehen ist, wobei das Konvektionsheizmodul (24) eines der Heizmodule (10, 11, 13) und vorzugsweise den entlang der Konvektionsströmung (9) dem Heizmodul (10, 11, 13) vorgelagerten Konvektionsgebläseauslass (12, 14, 16) und gegebenenfalls das dem Konvektionsgebläseauslass (12, 14, 16) dieses Konvektionsheizmoduls (24) zugeordnete Gebläse (23) umfasst.

15. Backofen nach Anspruch 14, **dadurch gekennzeichnet,**
- **dass** das Konvektionsheizmodul (24) ein oberes Heizmodul (10', 11', 13') und ein zugehöriges unteres Heizmodul (10", 11", 13"), insbesondere das zweite obere Heizmodul (11') und das zweite untere Heizmodul (11 ") oder das weitere obere Heizmodul (13') und das weitere untere Heizmodul (13") umfasst,
- **dass** das Konvektionsheizmodul (24) vorzugsweise die zugehörigen, den Heizmodulen (10, 11, 13) vorgelagerten, Konvektionsgebläseauslässe (12, 14, 16) umfasst,
und **dass** das Konvektionsheizmodul (24) gegebenenfalls das den Konvektionsgebläseauslässen (12, 14, 16) dieses Konvektionsheizmoduls (24) zugeordnete Gebläse (23) umfasst.

16. Backofen nach einem der Ansprüche 14 oder 15, **dadurch gekennzeichnet, dass** entlang der Längsrichtung (18) zwei oder mehr Konvektionsheizmodule (24) angeordnet sind.

17. Verfahren zum Herstellen gebackener, bevorzugt essbarer, Produkte in einem Backofen, bei dem mehrere entlang eines Endlosförderers (1) vorgesehene offenbare und schließbare Backzangen (2), aneinandergereiht jeweils nacheinander:
- durch einen Backmassenauftragsbereich (3) zum Auftrag einer Backmasse auf eine geöffnete Backzange (2),
- durch einen Schließbereich (4) zum Schließen der Backzangen (2),
- durch einen entlang des Endlosförderers (1) verlaufenden, länglichen Backraum (5) zum Backen der Backprodukte in den geschlossenen Backzangen (2), in dem mindestens eine Heizanordnung (8) zur Beheizung der im Backraum (5) befindlichen Backzangen (2) vorgesehen ist,
- durch einen Öffenbereich (6) zum Öffnen der Backzangen (2),
- und durch einen Backproduktentnahmebereich (7) zur Entnahme der gebackenen Produkte aus den geöffneten Backzangen (2) befördert werden,
- wobei, entlang der Längsrichtung (18) betrachtet, an einer Seite des Backraums (5) die Brennraumgase durch einen Abzug (15) abgeführt werden,
- wobei, entlang der Längsrichtung (18) betrachtet, an der anderen Seite des Backraums (5) durch einen ersten Konvektionsgebläseauslass (16) ein erster Gasvolumenstrom zur Bildung oder Unterstützung einer entlang der Längsrichtung (18) bis zum Abzug (15) verlaufenden Konvektionsströmung (9) in den Backraum (5) eingebracht wird,
**dadurch gekennzeichnet,**
- **dass** das entlang der Konvektionsströmung (9) strömende Backraumgas mindestens ein erstes Heizmodul (10) passiert und dadurch erwärmt wird, wobei dem entlang der Konvektionsströmung (9) strömenden Backraumgas durch das erste Heizmodul (10) ein erster Heizgasvolumenstrom beigemengt wird,
- **dass** das entlang der Konvektionsströmung (9) strömende Backraumgas anschließend mindestens einen zweiten Konvektionsgebläseauslass (12) passiert, wobei dem entlang der Konvektionsströmung (9) strömenden Backraumgas durch den zweiten Konvektionsgebläseauslass (12) ein zweiter Gasvolumenstrom beigemengt wird oder wobei das entlang der Konvektionsströmung (9) strömende Backraumgas durch den zweiten Konvektionsgebläseauslass (12) weitergefördert wird,
- **dass** das entlang der Konvektionsströmung (9) strömende Backraumgas anschließend mindestens ein zweites Heizmodul (11) passiert und dadurch erwärmt wird, wobei dem entlang der Konvektionsströmung (9) strömenden Backraumgas durch das zweite Heizmodul (11) ein zweiter Heizgasvolumenstrom beigemengt wird,
- und **dass** das entlang der Konvektionsströmung (9) strömende Backraumgas anschließend den Backraum (5) weiter durchströmt und anschließend in den Abzug (15) eintritt.
